# EUROPÄISCHE PATENTSCHRIFT

(11) **EP 0 386 055 B1**
(45) Veröffentlichungstag und Bekanntmachung des Hinweises auf die Patenterteilung: **17.03.1993**
(21) Anmeldenummer: 88909512.1
(22) Anmeldetag: 08.11.1988
(51) Int. Cl.: H02J 7/14, B60R 16/02

(54) **FAHRZEUGBORDNETZSYSTEME**
VEHICLE CIRCUIT SYSTEMS
CIRCUITS DE BORD DE VEHICULES

(30) Priorität: 21.12.1987 DE 3743316
(43) Veröffentlichungstag der Anmeldung: 12.09.1990
(73) Patentinhaber: ROBERT BOSCH GMBH, 70442 Stuttgart (DE)
(72) Erfinder: VAN DER BROECK, Heinz, D-5352 Zülpich (DE); HENNEBERGER, Gerhard, D-7141 Möglingen (DE); FRISTER, Manfred, D-7141 Schwieberdingen (DE)
(86) Internationale Anmeldenummer: DE8800690
(87) Internationale Veröffentlichungsnummer: WO8906061

(56) Entgegenhaltungen:
- EP-A- 0 256 689
- DE-A- 3 227 653
- DE-A- 3 719 376
- US-A- 4 055 772

## Beschreibung

### Stand der Technik

Die Erfindung geht aus von einem Fahrzeugbordnetzsystem nach der Gattung des Hauptanspruchs.

Herkömmliche Fahrzeugbordnetzsysteme enthalten als wesentliche Bestandteile einen Starter und einen Generator, eine Batterie und Verbraucher. Die Erzeugung der elektrischen Energie erfolgt im Generator, üblicherweise einem Drehstromgenerator, dessen Ausgangsspannung durch den Regler auf 12 Volt begrenzt wird. Diese Spannung von 12 Volt liegt an der Batterie und am überwiegenden Teil der Verbraucher an. Ein solches Fahrzeugbordnetzsystem wird beispielsweise in der DE-OS 33 13 398 beschrieben.

Aufgrund der niedrigen Batterie- bzw. Bordnetzspannung ergeben sich verschiedene Nachteile. Die Auslegung der Drehstrommaschine wird erschwert, da infolge der hohen Stromstärken große Wicklungsquerschnitte erforderlich sind. Die Gleichrichter bzw. Wechselrichterelemente müssen als Folge der hohen Stromstärken an diese hohen Stromstärken angepaßt werden, die Verluste und damit die Kühleinrichtung der Gleichrichter bzw. Wechselrichterelemente werden dadurch sehr groß.

### Vorteile der Erfindung

Das erfindungsgemäße Fahrzeugbordnetzsystem mit den kennzeichnenden Merkmalen des Hauptanspruchs hat demgegenüber den Vorteil, daß sich an den Starter/Generator ein zusätzlicher Wechselspannungszwischenkreis anschließt, dessen Spannung gegenüber den in bisherigen Fahrzeugbordnetzsystemen eingesetzten Spannungen deutlich erhöht ist. Dadurch kann die Generatorausgangsspannung bzw. die am Starter liegende Spannung gegenüber herkömmlichen Bordnetzsystemen ebenfalls deutlich erhöht werden, dies vereinfacht die Maschinenauslegung wesentlich, denn infolge der geringeren Stromstärke können wesentlich kleinere Wicklungsquerschnitte gewählt werden.

Da die Verluste der im Wechselrichter eingesetzten Leistungshalbleiter in erster Linie stromabhängig sind, verbessert die Reduzierung der Stromstärke den Wirkungsgrad, außerdem können die eingesetzten Leistungshalbleiter spannungs- und strommäßig besser ausgenutzt werden. Aus dem zusätzlichen, mit einer deutlich erhöhten Wechselspannung versorgten Zwischenkreis können in einfacher Weise weitere Spannungen ausgekoppelt werden, beispielsweise eine, lediglich von den Parametern der Spannungswandler ahängige beliebige potentialfreie Gleichspannung oder eine beliebige Wechselspannung. Die hierfür benötigten Bauelemente lassen sich wesentlich kostengünstiger realisieren als bei Verwendung eines einzigen 12 Volt Bordnetzsystems.

Die Erhöhung der Batterie bzw. der Verbraucherspannung beispielsweise auf 24 Volt gegenüber 12 Volt in herkömmlichen Bordnetzsystemen ermöglicht eine Verringerung der Leitungsquerschnitte im gesamten Bordnetzsystem.

Ein Fahrzeugbordnetzsystem mit Batterie, Generator und Verbrauchern ist auch aus der DE-OS 37 19 376 bekannt. Dieses Bordnetzsystem weist jedoch neben der eigentlichen Bordnetzspannung noch weitere, an bestimmte Erfordernisse angepaßte Spannungen auf, beispielsweise eine 40-Volt Gleichspannung an einer Steckdose oder eine 110-Volt bzw. 220-Volt Gleichspannung an einer anderen Steckdose, dabei sind diese erhöhten Spannungen zum Betrieb von elektrischen Geräten, beispielsweise eines Schweißgerätes, bei stehendem Kraftfahrzeug vorgesehen.

### Zeichnung

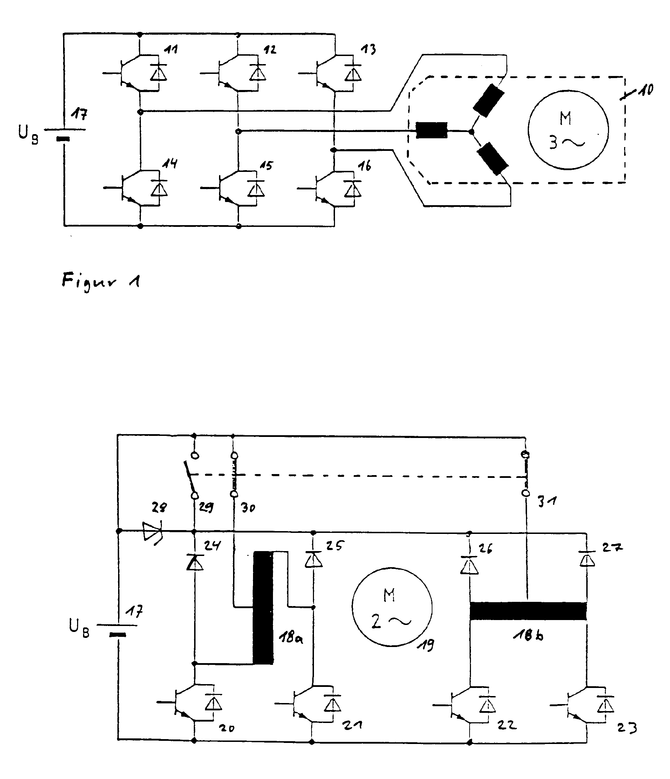

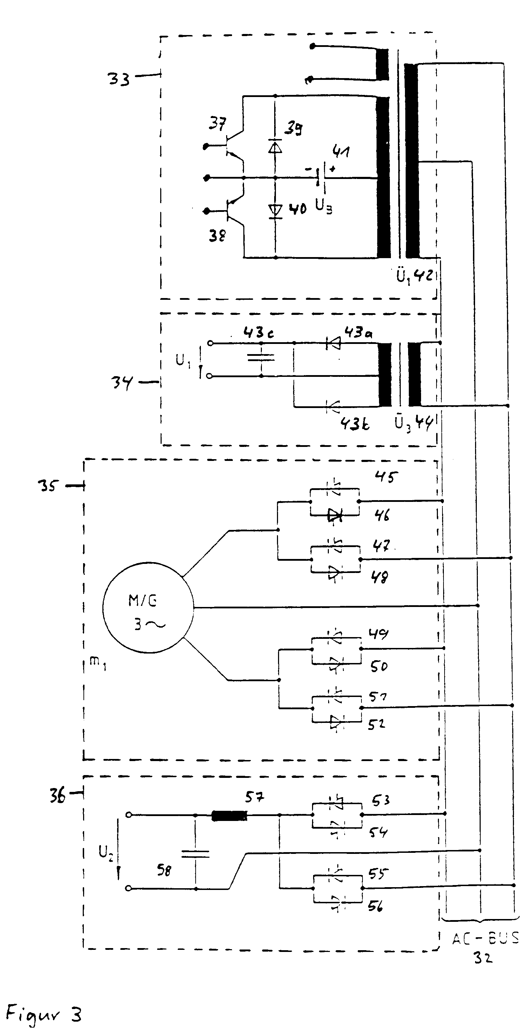

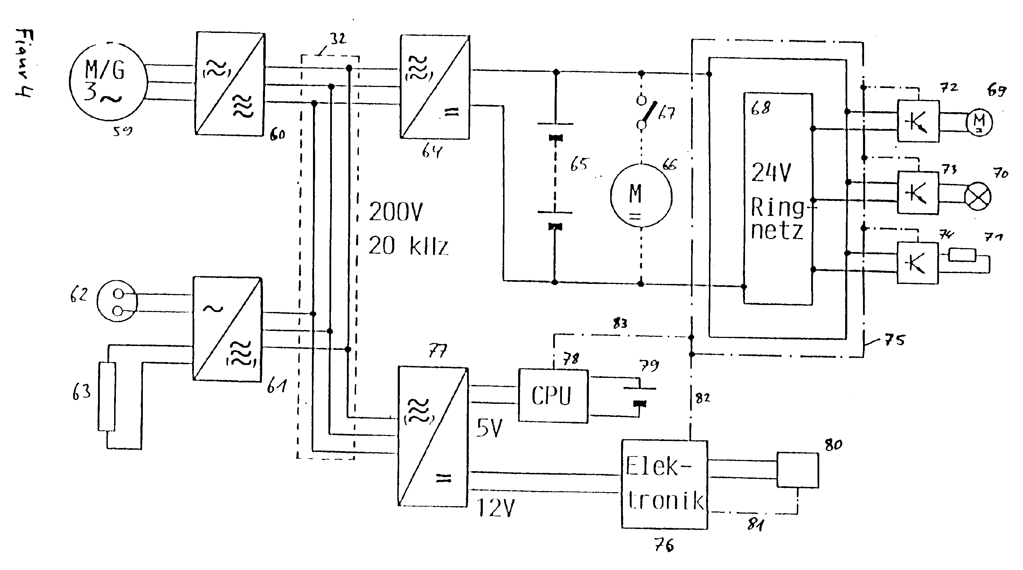

Figur 1 zeigt eine elektrische Maschine mit Pulswechselrichter und Figur 2 eine elektrische Maschine mit einer Zweiphasenschaltung und bifilarer Wicklung, Figur 3 zeigt ein Ausführungsbeispiel eines Schwungradstarters/Generators mit einem erfindungsgemäßen Wechselspannungszwischenkreis und in Figur 4 ist ein komplettes 24 Volt Bordnetz mit Multiplex und Schwungradstarter/Generator sowie einem zusätzlichen Wechselspannungszwischenkreis dargestellt.

### Beschreibung der Ausführungsbeispiele

In Figur 1 ist die grundsätzliche Anordnung eines Schwungradstarter/Generators 10 mit sechs Pulswechselrichterelementen 11 bis 16 und einer Batterie 17 dargestellt. Dabei bestehen die sechs Pulswechselrichterelemente 11 bis 16 jeweils aus einem Transistor und einer antiparallel geschalteten Diode. Die drei Ständerwicklungen des Starter/Generators sind jeweils zwischen zwei Pulswechselrichterelementen angeschlossen, die jeweils entgegengesetzten Seiten der Pulswechselrichterelemente sind an den Plus- bzw. Minuspol der Batterie 17 angeschlossen. Die Pulswechselrichterelemente 11, 12 und 13 bzw. 14, 15 und 16 werden jeweils alternierend mit einer derartigen Einschaltdauer geschaltet, daß sich die erforderlichen Klemmenspannungen ergeben (z.B. mit Hilfe einer geeigneten Pulsweitenmodulation).

Statt der aus Figur 1 bekannten Schaltungsanordnung zum antrieb eines Schwungrad-Starter/Generators kann auch die in Figur 2 dargestellte Schaltungsanordnung eines Zweiphasensystems mit bifilaren Wicklungen eingesetzt werden. Dabei sind die Ständerwicklungen 18a und 18b über vier Pulswechselrichter 20, 21, 22 und 23 mit dem negativen Pol der Batterie 17 verbunden, die Verbindung mit dem positiven Pol der Batterie erfolgt über die vier Dioden 24, 25, 26 und 27. Mit 19 ist der Läufer des Schwungrad-Starter/Generators bezeichnet. In die Verbindungsleitung zwischen den Kathoden dieser Dioden und dem positiven Pol der Batterie wird zusätzlich eine Zenerdiode 28 geschaltet. 29, 30 und 31 sind Schalter, über die der positive Pol der Batterie direkt mit den Kathoden der Dioden 24, 25, 26 und 27 bzw. mit den Mittelanzapfungen der Ständerwicklungen 22 und 23 verbunden werden kann.

In Figur 3 ist ein Ausführungsbeispiel eines Fahrzeugbordnetzsystems dargestellt, in dem ein Wechselspannungszwischenkreis 32, nachfolgend auch als AC-Bus bezeichnet, eingesetzt wird, der mit einem Gegentaktwandler 33, einer Schaltungsanordnung zur Erzeugung einer beliebig wählbaren potentialfreien Gleichspannung 34, einem Schwungradstarter/Generator mit Direktumrichter 35 sowie einer Schaltungsanordnung zur Erzeugung einer beliebigen Wechselspannung 36 verbunden ist. Der Gegentaktwandler 33 ist aus zwei Transistoren 37 und 38, zwei Dioden 39 und 40, einer Batterie 41 und einem Übertrager 42 aufgebaut. Dabei sind die Rollektoren der Transistoren 37 und 38 mit den Kathoden der zugehörigen Dioden 39 und 40 verbunden und weiterhin an den Anfang bzw. das Ende der Sekundärwicklungen des Übertragers 42 angeschlossen. Die Emitter der Transistoren 37 und 38 sind über die Anoden der Dioden 39 und 40 an den negativen Pol der Batterie 41 angeschlossen, die positive klemme der Batterie 41 ist weiterhin an die Mittelanzapfung des Übertragers angeschlossen.

Der Gegentaktwandler kann als selbstschwingender Wandler betrieben werden, die Bereitstellung des Basisstroms erfolgt dann über die Sekundärwicklung des Übertragers. Wird der Gegentaktwandler dagegen als gesteuerter Gegentaktwandler eingesetzt, so sind zusätzliche Treiberstufen erforderlich. Der dazu eingesetzte Oszillator kann vorzugsweise mit einer Frequenz oberhalb des Hörbereichs, z.B. 20 kHz arbeiten, die zugehörige Schaltungsanordnung wird jeweils an die Basis der Transistoren 37 und 38 angeschlossen.

Die Schaltungsanordnung 34, mit der aus der hochfrequenten Spannung des Wechselspannungszwischenkreises eine potentialfreie Gleichspannung erzeugt werden kann, ist über einen Übertrager 44 an den Wechselspannungszwischenkreis angeschlossen. Der Wicklungsanfang und das Wicklungsende der Sekundärseite des Übertragers 44 sind über die Dioden 43a und 43b miteinander verbunden. Zwischen die Kathoden der beiden Dioden 43a und 43b und die Mittenanzapfung der Sekundärwicklung des Übertragers 44 ist ein Kondensator 43c geschaltet, an dem die beliebige (je nach Windungsverhältnis des Übertragers) potentialfreie Gleichspannung agegriffen wird.

Der Schwungradstarter/Generator mit Direktumrichter 35 enthält in dem in Figur 3 dargestellten Ausfürungsbeispiel acht Thyristoren 45 bis 52, die jeweils paarweise antiparallel geschaltet sind und den Schwungradstarter/Generator mit dem AC-Bus verbindet. Der Gegentaktwandler 33 muß in diesem Falle mit einer Mittenanzapfung versehen sein (B4-V-Schaltung).

Aus der hochfrequenten, rechteckförmigen Wechselspannung des Wechselspannungszwischenkreises 32 (AC-Bus) kann mit Hilfe von vier Thyristoren 53 bis 56 und einem Tiefpaßfilter, das die Spule 57 und den Kondensator 58 enthält, eine sinusförmige modulierte Spannung niedriger Frequenz beispielsweise 220 Volt, 50 Hz (Steckdose im Auto) ausgekoppelt werden. Die Thyristoren 53 und 54 bzw. 55 und 56 sind wiederum paarweise antiparallel geschaltet und verbinden den Wechselspannungszwischenkreis 32 mit der Spule 57 während die Mittelanzapfung des Gegentaktwandlers 33 an den Kondensator 58 gelegt wird.

Die Figur 4 zeigt ein komplettes 24 Volt Fahrzeugbordnetz mit Multiplex und Schwungrad-Starter/Generator. Ein Dreiphasen-Schwungradstarter/Generator 59 ist mit einem Direktumrichter 60 über drei Leitungen verbunden. Auf der Ausgangsseite des Direktumrichters schließt sich der Wechselspannungszwischenkreis 32 (AC-Bus) an, an welchen die restlichen Komponenten des Bordnetzes angekoppelt sind.

Ein AC/AC-Wandler 61 koppelt aus dem Wechselspannungszwischenkreis eine 220 Volt, 50 Hz Wechselspannung aus, die eine Steckdose 62 im Kraftfahrzeug versorgt. Über den Wandler 61 wird weiterhin eine 80 Volt, 50 Hz Wechselspannung für eine heizbare Scheibe 63 ausgekoppelt. Über einen Gegentaktwandler 64 wird aus dem Wechselspannungszwischenkreis eine Gleichspannung von 24 Volt ausgekoppelt, die an der Batterie 65 bzw. an einem gegebenenfalls anstelle eines Starter/Generator verwendeten Starter 66 über einen Schalter 67 anliegt. Weiterhin ist an den Gleichspannungsausgang des Gegentaktwandlers 64 bzw. an die Batterie ein 24 Volt Ringnetz 68 angeschlossen, das die verschiedenen Verbraucher 69, 70 und 71 mit Spannung versorgt. Dabei werden die Verbraucher über Leistungshalbleiter 72, 73 und 74 gesteuert. Diese Leistungshalbleiter sind über eine Datenringleitung 75 über ein Multiplex-System mit der Elektronik 76 verbunden. Ein AC/DC-Wandler 77 ist ebenfalls mit dem Wechselspannungszwischenkreis 32 verbunden und koppelt eine 5 Volt Gleichspannung zur Versorgung der Rechnereinheit (CPU) 78 aus. An die Rechnereinheit 78 schließt sich eine zusätzliche Batterie 79 an, die ggf. die Spannungsversorgung der Rechnereinheit 78 übernehmen kann. Weiterhin wird eine 12 Volt Gleichspannung zur Versorgung der Elektronik 76 und eines Sensors 80 ausgekoppelt. Der Sensor 80 ist mit einer Datenleitung 81 mit der Elektronik 76 verbunden, eine weitere Datenleitung 82 führt von der Elektronik 76 zur Datenringleitung 75, ebenso führt eine Datenleitung 83 von der Rechnereinheit 78 zur Datenringleitung 75.

Im Startfall wird der Schwungrad-Starter/Generator über den Gegentaktwandler 64, den Wechselspannungszwischenkreis 32 und dem Direktumrichter 60 aus der Batterie mit 200 V Wechselspannung versorgt. Nach Erreichen des normalen Betriebszustandes versorgt der Schwungradstarter/Generator das Bordnetzsystem mit der erforderlichen Energie, dabei werden die Spannungsumwandlungen in den dafür vorgesehenen Umrichtern und Wandlern durchgeführt. Die Generatorausgangsspannung beträgt ebenso wie die Spannung im Wechselspannungszwischenkreis 200 Volt.

Anstelle eines Schwungradstarter/Generators können auch Einzelkomponenten, also beispielsweise ein permanentmagnet- oder elektrisch erregter Synchrongenerator mit freier Spannung und ein parallel zur Batterie geschalteter permanentmagnet- oder elektrisch erregter Direkt- oder Vorlegestarter verwendet werden.

Batterie und Starter und/oder Generator sind ggf. voneinander potentialgetrennt, außerdem können Batterie und Starter und/oder Generator unabhängig voneinander an beliebiger Stelle im Fahrzeug eingebaut werden.

## Patentansprüche

1. Fahrzeugbordnetzsystem mit einer Batterie (41; 65), einem Starter/Generator (35; 59) sowie Verbrauchern (69, 70, 71), mit einem Bordnetzsystem, das wenigstens zwei verschiedene, an die jeweiligen Erfordernisse der einzelnen Bordnetzkomponenten optimal angepaßte Spannungen aufweist und bei dem die einzelnen Elemente über einen Wechselspannungszwischenkreis (32) verbunden sind, dadurch gekennzeichnet, daß der Starter/Generator (35; 59) über Umrichter (45 bis 52; 60) mit dem Wechselspannungszwischenkreis (32) verbunden ist und daß die Spannung des Wechselspannungszwischen kreises (32) gegenüber der Bordnetz- bzw. Batteriespannung deutlich erhöht ist.

2. Fahrzeugbordnetzsystem nach Anspruch 1, dadurch gekennzeichnet, daß die Spannung des Starter/Generators (35; 59) und des Spannungszwischenkreises (32) deutlich höher ist als die Bordnetz- bzw. Batteriespannung vorzugsweise 200 Volt.

3. Fahrzeugbordnetzsystem nach Anspruch 1, dadurch gekennzeichnet, daß der zwischen Starten/Generator (35; 59) und Spannungszwischenkreis (32) geschaltete Umrichter (45 bis 52; 60) ein Direktumrichter ist.

4. Fahrzeugnordnetzsystem nach einem der vorhergehenden Ansprüche, dadurch gekennzeichnet, daß die Batterie- und Verbrauchernennspannung 24 Volt beträgt.

5. Fahrzeugnordnetzsystem nach einem der vorhergehenden Ansprüche, dadurch gekennzeichnet, daß dem mit erhöhter Spannung betriebenen Spannungszwischenkreis (32) Spannungswandler (42, 44, 45 - 56; 61, 64, 77) zugeordnet sind, die zur getrennten Spannungsversorgung weiterer Verbraucher, insbesondere mit 220 Volt Wechselspannung betreibbarer, vorgesehen sind.

6. Fahrzeugbordnetzsystem nach Anspruch 1, dadurch gekennzeichnet, daß als Starter/Generator (35; 59) eine Asynchronmaschine verwendet wird.

7. Fahrzeugbordnetzsystem nach Anspruch 1, dadurch gekennzeichnet, daß als Starter/Generator (35; 59) eine Synchronmaschine in Zweiphasenschaltung mit bifilarer Wicklung verwendet wird.

8. Fahrzeugbordnetzsystem nach Anspruch 1, dadurch gekennzeichnet, daß die Verbraucher an ein 24 Volt Ringnetz (68) angeschlossen sind.

9. Fahrzeugbordnetzsystem nach Anspruch 1, dadurch gekennzeichnet, daß als Starter/Generator (35; 59) ein Schwungradstarter/Generator vorgesehen ist.

10. Fahrzeugnordnetzsystem nach einem der vorhergehenden Ansprüche, dadurch gekennzeichnet, daß Batterie (41: 65) und Starter und/oder Generator (35; 59) voneinander potentialgetrennt sind.

11. Fahrzeugnordnetzsystem nach einem der vorhergehenden Ansprüche, dadurch gekennzeichnet, daß Batterie (41: 65) und Starter und/oder Generator (35; 59) unabhängig voneinander an beliebiger Stelle im Fahrzeug eingebaut werden.

12. Fahrzeugbordnetzsystem nach Anspruch 1, dadurch gekennzeichnet, daß zwischen den Wechselspannungszwischenkreis (32) und die Batterie (41; 65) ein Gegentaktwandler (33; 64) geschaltet ist.

13. Fahrzugbordnetzsystem nach einem der Ansprüche 1-12, dadurch gekennzeichnet, daß alle Stromrichterkomponenten (37,38, 45-56) so betrieben werden, daß sie außerhalb des Hörbereichs arbeiten.

## Claims

1. Vehicle electrical system having a battery (41; 65), a starter/generator (35; 59) and consumers (69, 70, 71), having a vehicle network which has at least two different voltages optimally matched to the respective requirements of the individual vehicle network components, and in which the individual elements are connected via an AC voltage link (32), characterised in that the starter/generator (35; 59) is connected via converters (45 to 52; 60) to the AC voltage link (32), and in that the voltage of the AC voltage link (32) is distinctly increased by contrast with the vehicle network or battery voltage.

2. Vehicle electrical system according to Claim 1, characterised in that the voltage of the starter/generator (35; 59) and of the voltage link (32) is distinctly higher than the vehicle network or battery voltage, preferably 200 volts.

3. Vehicle electrical system according to Claim 1, characterised in that the converter (45 to 52; 60) connected between the starter/generator (35; 59) and AC voltage link (32) is a direct converter.

4. Vehicle electrical system according to one of the preceding claims, characterised in that the battery and consumer nominal voltage is 24 volts.

5. Vehicle electrical system according to one of the preceding claims, characterised in that voltage transformers (42, 44, 45 - 56; 61, 64, 77) which are provided for separate voltage supply of further consumers, which in particular can be operated with 220 volts AC, are assigned to the voltage link (32) operated with increased voltage.

6. Vehicle electrical system according to Claim 1, characterised in that an asynchronous machine is used as starter/generator (35; 59).

7. Vehicle electrical system according to Claim 1, characterised in that a synchronous machine in a two-phase connection to a bifilar winding is used as starter/generator (35; 59).

8. Vehicle electrical system according to Claim 1, characterised in that the consumers are connected to a 24-volt ringed network (68).

9. Vehicle electrical system according to Claim 1, characterised in that a flywheel starter/generator is provided as starter/generator (35; 59).

10. Vehicle electrical system according to one of the preceding claims, characterised in that the battery (41; 65) and starter and/or generator (35; 59) are isolated from one another.

11. Vehicle electrical system according to one of the preceding claims, characterised in that the battery (41; 65) and starter and/or generator (35; 59) are installed independently of one another at an arbitrary point in the vehicle.

12. Vehicle electrical system according to Claim 1, characterised in that a push-pull converter (33; 64) is connected between the AC voltage link (32) and the battery (41; 65).

13. Vehicle electrical system according to one of Claims 1-12, characterised in that all the converter components (37, 38, 45-56) are operated in such a way that they work outside the hearing range.

## Revendications

1. Circuit de bord de véhicules avec une batterie (41, 65), un générateur/démarreur (35, 59) ainsi que des endroits d'utilisation (69, 70 71) avec un circuit de bord qui comprend au moins deux tensions différentes, adaptées de façon optimale aux exigences respectives des composants de circuit individuels et dans lequel les composants individuels sont reliés par un circuit intermédiaire (32) de tension alternative, caractérisé :
- en ce que le générateur/démarreur (35, 59) est relié par un convertisseur (45 à 52, 60) au circuit intermédiaire de tension alternative (32) et,
- en ce que la tension du circuit intermédiaire de tension alternative (32) est élevée par rapport à la tension du réseau de bord ou de la batterie.

2. Circuit de bord de véhicules selon la revendication 1, caractérisé en ce que la tension du générateur/démarreur (35, 39) et du circuit intermédiaire de tension (32) est nettement plus élevée que la tension du réseau de bord ou de la batterie, de préférence 200 volts.

3. Circuit de bord de véhicules selon la revendication 1, caractérisé en ce que le convertisseur (45 à 52, 60) branché entre générateur/démarreur (35, 59) et circuit intermédiaire de tension (32) est un convertisseur direct de courant alternatif.

4. Circuit de bord de véhicules selon l'une quelconque des revendications précédentes, caractérisé en ce que la tension de la batterie et des lieux de consommation est de 24 volts.

5. Circuit de bord de véhicules selon l'une quelconque des revendications précédentes caractérisé en ce que, sont associés au circuit intermédiaire de en ce que, sont associés au circuit intermédiaire de tension (32), commandé à tension élevée, des transformateurs de tension (42, 44, 45 - 56 ; 61, 64, 77), qui sont prévus pour l'alimentation en tension séparée d'autres éléments de consommation en particulier pouvant être commandés avec une tension alternative de 220 volts.

6. Circuit de bord de véhicules selon la revendication 1, caractérisé en ce que, comme générateur/démarreur (35, 59), on utilise un alternateur asynchrone.

7. Circuit de bord de véhicules selon la revendication 1, caractérisé en ce que comme générateur/démarreur (35, 59) on utile un alternateur synchrone en montage biphasé et enroulement bifilaire.

8. Circuit de bord de véhicule selon la revendication 1, caractérisé en ce que les éléments de consommation sont branchés sur un réseau à boucle (68) de 24 volts.

9. Circuit de bord de véhicules selon la revendication 1, caractérisé en ce que comme générateur/démarreur (35, 59) est prévue un générateur/démarreur à volant.

10. Circuit de bord de véhicules selon l'une quelconque des revendications précédentes, caractérisé en ce que la batterie (41, 65) et démarreur et/ou générateur (35, 59) sont à potentiel distinct les uns des autres.

11. Circuit de bord de véhicules selon l'une quelconque des revendications précédentes, caractérisé en ce que batterie (41, 65) et démarreur et/ou générateur (35, 59) sont montés indépendamment les uns des autres, en des endroits quelconques du véhicule.

12. Circuit de bord de véhicules, selon la revendication 1, caractérisé en ce que, entre le circuit intermédiaire de tension alternative (32) et la batterie (41, 65) est branché un transformateur symétrique (33, 64).

13. Circuit de bord de véhicules selon la revendication 1, caractérisé en ce que tous les composants de convertisseur (37, 38, 45-56) sont commandés pour travailler en dehors du domaine de la sensation auditive.
